# EUROPEAN PATENT APPLICATION

(11) **EP 1 130 904 A1**
(43) Date of publication of application: **05.09.2001**
(21) Application number: 01102722.4
(22) Date of filing: 06.02.2001
(51) Int. Cl.: H04N 5/225, G08B 15/00

(54) **Container for closed-circuit television cameras and surveillance systems with protection of the connectors of the cables**

(30) Priority: 22.02.2000 IT PD000013 U
(71) Applicant: TEKNO SYSTEM S.R.L., I-36010 CARRE' (VICENZA) (IT)
(72) Inventor: Marchesini, Renzo, 36015 Schio (Vicenza) (IT)
(74) Representative: Modiano, Guido, Dr.-Ing.

(57) **Abstract**

A container for television cameras of closed-circuit surveillance and monitoring systems, comprising a composite box-like body (12) with a bottom (13) whereon connectors (15) for connecting cables are installed. The container further comprises a cover (19) which conceals the connectors, preventing access thereto, is hinged to the body (12) and can be closed onto the bottom (13) by at least one fixing element (23).

## Description

The present invention relates to a container for television cameras, particularly of closed-circuit monitoring and surveillance systems.

It is known that television cameras of closed-circuit monitoring and surveillance systems, supported by brackets which are fixed to a wall or to a ceiling, should be installed at heights which cannot be accessed without using ladders or the like.

In practice, very often this does not occur (for example for television cameras for house gates), with consequent problems related to protection against vandalism.

The television cameras proper are accommodated in containers, and such containers are arranged in corresponding enclosures which are rigidly and orientatably coupled to the brackets; this is obviously done in order to direct them adequately.

The television camera containers substantially comprise a composite box-like body with a bottom whereon connectors are installed for cables for connection to the electric power supply and to the various surveillance monitors.

Such connectors are currently easily accessible and it is therefore easy to disable the television cameras simply by disconnecting the connections.

The aim of the present invention is therefore to protect the connectors of the connecting cables so as to render them inaccessible.

Within this aim, an object of the invention is to improve the security of surveillance and monitoring systems which use television cameras.

Another object is to allow access to the electrical connections for repairs and maintenance.

Another object is to avoid significantly affecting the overall cost of the product.

This aim and these and other objects which will become better apparent hereinafter are achieved by a container for television cameras of closed-circuit surveillance and monitoring systems, comprising a composite box-like body with a bottom whereon connectors for connecting cables are installed, characterized in that it comprises a cover which conceals said connectors, preventing access thereto, is hinged to said body and can be closed onto said bottom by means of at least one fixing element.

Advantageously, the bottom is joined to the rest of the body by way of screws which are arranged axially, and the cover is shaped so as to conceal the heads of said screws so as to prevent access to them.

Further characteristics and advantages of the invention will become better apparent from the detailed description of an embodiment thereof, illustrated only by way of non-limitative example in the accompanying drawings, wherein:

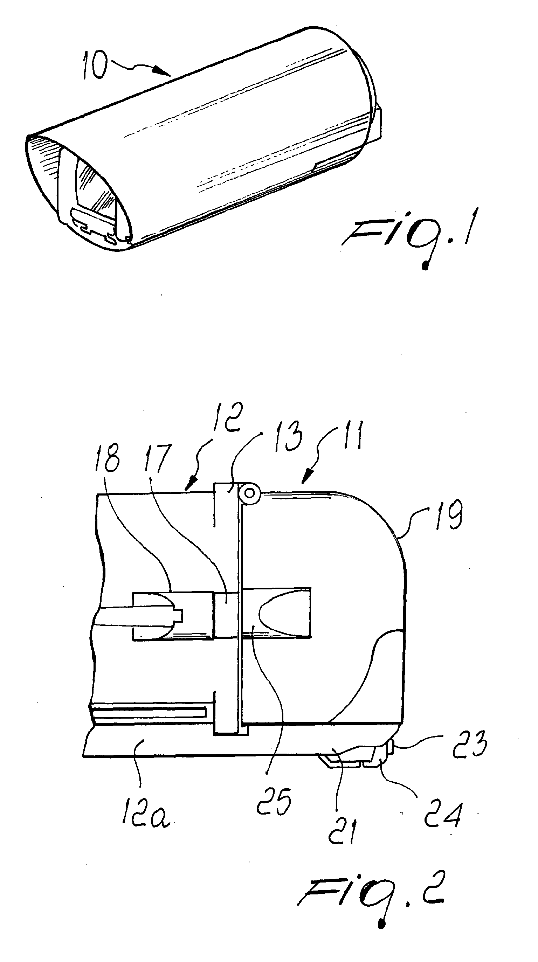

Figure 1 is a perspective view of an enclosure for television cameras of closed-circuit systems;
Figure 2 is an enlarged-scale side view of a detail, in the operating configuration, of the container of the television camera arranged inside the enclosure of Figure 1;
Figure 3 is a side view of the detail of Figure 2 in an inactive configuration; and
Figure 4 is a sectional view of a detail which illustrates a safety fixing element between the cover and the container.

With reference to the figures, an enclosure for television cameras for closed-circuit surveillance and monitoring systems is designated by the reference numeral 10.

The enclosure 10 internally accommodates a container 11 of the television camera (not shown in the figures), which comprises a composite box-like body 12 with a bottom 13 whereon connectors 14 are installed for connection cables 15 which are shown in dashed lines in Figure 3.

The box-like body 12 is joined by dovetail interlocking with a base 12a.

The bottom 13 is fixed to the rest of the body 12 by means of two mutually opposite screws 16 which are arranged axially.

The screws 16 join protrusions 17 and 18 which protrude respectively from the bottom 13 and from the rest of the box-like body 12 and are arranged in diametrically opposite pairs.

According to the invention, the container 11 comprises a cambered cover 19 being associated with the bottom 13 by means of a hinge 20 which is arranged opposite with respect to the base 12a.

The base 12a protrudes with respect to the bottom 13 with an axial protrusion 21 whereon the cover 19 rests.

A threaded dead hole 22 is provided in the protrusion 21, and a screw 23 engages therewith; such screw has a shaped head which can be operated by means of a standardized or special tool.

The screw 23 can have, in particular cases, a head which is shaped for actuation with a dedicated tool.

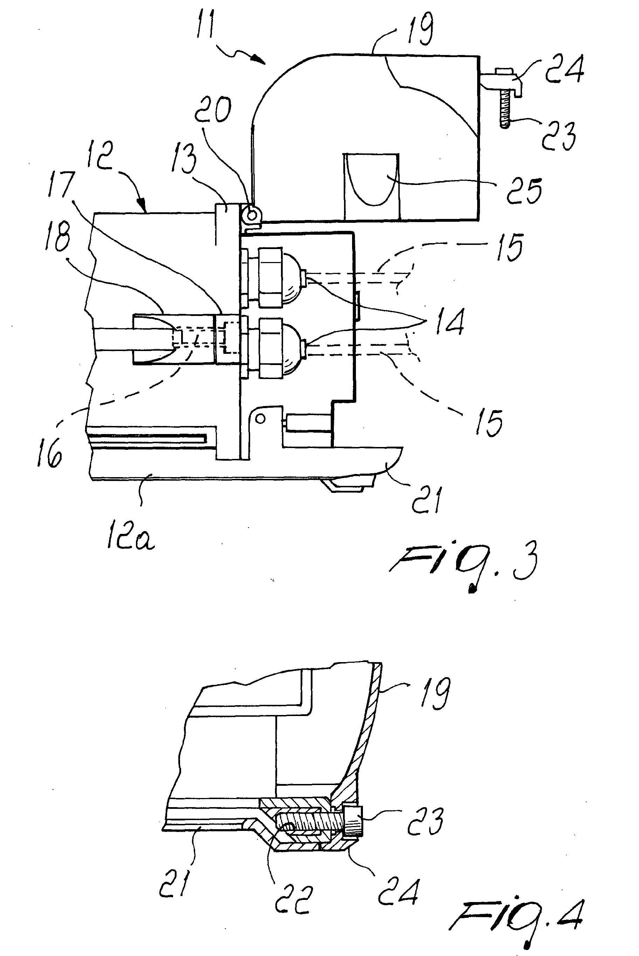

The screw 23 joins the base 12a to a protrusion 24 which protrudes from the cover 19; when the cover is closed, the protrusion faces the threaded dead hole 22, as shown in particular in Figure 4.

As an alternative to the screw 23 it is possible to provide a security locking bolt, not shown in the figures.

Advantageously, the cover 19 has, at the heads of the screws 16, shaped portions 25 which in the closed configuration conceal said heads in order to make them inaccessible.

Conveniently, through holes, not shown in the figures, are provided in the protrusion 21 of the base 12a for the passage of the connecting cables 15.

In practice it has been observed that the intended aim and objects of the present invention have been achieved.

The cover 19 in fact makes it impossible to access the connectors 14 and the inside of the container 11, since even the heads of the screws 16, which would allow to open the bottom 13, are covered.

The cover 19 can be opened only by means of a tool which can be available for example only to the user of the system and/or to the personnel assigned to maintenance and/or repairs.

In practice, the materials used, so long as they are compatible with the contingent use, as well as the dimensions, may be any according to requirements.

The disclosures in Italian Utility Model Application No. PD99U000013 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A container for television cameras of closed-circuit surveillance and monitoring systems, comprising a composite box-like body (12) with a bottom (13) whereon connectors (15) for connecting cables are installed, **characterized in that** it comprises a cover (19) which conceals said connectors (15), preventing access thereto, is hinged to said body (12) and can be closed onto said bottom (13) by at least one fixing element (23).

2. The container according to claim 1, **characterized in that** said bottom (13) is joined to body (12) by means of screws (16) which are arranged axially, said cover (19) being shaped so as to conceal the heads of said screws so as to prevent access thereto.

3. The container according to claim 1, **characterized in that** said at least one security fixing element (23) comprises a screw with a head which is shaped so as to be operated by means of a standardized or special dedicated tool.

4. The container according to claim 1, **characterized in that** said at least one fixing element (23) is constituted by a locking bolt.

5. The container according to claim 1, **characterized in that** said box-like body (12) is joined to a base (12a) by means of a dovetail coupling, said base (12a) having a protrusion (21) which lies opposite to the hinged connection of said cover to said body, a threaded dead hole (22) for the coupling of said fixing element (23) being provided on said protrusion.
